(19)

Europäisches
Patentamt

European
Patent Office

Office européen
des brevets

(11) **EP 4 550 218 A1**

(12) **EUROPEAN PATENT APPLICATION**

(43) Date of publication:
**07.05.2025 Bulletin 2025/19**

(21) Application number: **24207717.0**

(22) Date of filing: **21.10.2024**

(51) International Patent Classification (IPC):
*G06N 5/01* (2023.01)      *G06N 7/01* (2023.01)

(52) Cooperative Patent Classification (CPC):
**G06N 5/01; G06N 7/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.11.2023 JP 2023189546**

(71) Applicant: **FUJITSU LIMITED**
**Kawasaki-shi, Kanagawa 211-8588 (JP)**

(72) Inventors:
• **KONOSHIMA, Makiko**
  **Kawasaki-shi, Kanagawa, 211-8588 (JP)**
• **TAMURA, Hirotaka**
  **Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(54) **COMPUTER-READABLE RECORDING MEDIUM STORING DATA PROCESSING PROGRAM, DATA PROCESSING METHOD, AND DATA PROCESSING APPARATUS**

(57)      A data processing program for causing a computer to execute: selecting, in a solution search using replicas based on an evaluation function including multiple state variables, a number of replicas from the replicas by prioritizing a replica with a low difference in temperature value from a first temperature corresponding to a first replica; acquiring a second state to be compared with the first state, based on a state acquired by the solution search; determining the number of state variables of which values are to be changed, based on comparison between a first value of the evaluation in the first state and a second value of the evaluation function in the second state; generating a third state in which the values of the number of state variables among the multiple state variables in the first state are changed; and continuing the solution search in the first replica by the third state.

FIG. 1

## Description

FIELD

The embodiments discussed herein are related to a data processing program, a data processing method, and a data processing apparatus.

BACKGROUND

An information processing apparatus may be used for solution finding of a combinatorial optimization problem. The combinatorial optimization problem is converted into an evaluation function representing energy of an Ising model, which is a model representing a behavior of a spin of a magnetic body. The information processing apparatus searches for a combination that minimizes or maximizes an evaluation function among combinations of values of state variables included in the evaluation function. The combination of values of state variables, which minimizes or maximizes an evaluation function, corresponds to a ground state or an optimal solution represented by a set of state variables. As a method for obtaining an approximate solution to the combinatorial optimization problem in a practical time, there is a method in which a simulated annealing (SA) method, a replica exchange method, and the like are combined based on a Markov-Chain Monte Carlo (MCMC) method.

For example, there is a proposal for an optimization apparatus that performs a solution search by a replica exchange method by using a plurality of replicas that are copies of state variables of a problem to be solved.

An apparatus for searching for a solution to a large-scale combinatorial optimization problem by a population annealing method using a plurality of replicas of a Boltzmann machine is proposed.

A method for obtaining a solution to a problem converted into an objective function by a hybrid computing system including a quantum processor and a digital processor that execute quantum annealing or an adiabatic quantum calculation is also proposed. An apparatus is also proposed in which quantum annealing is used to specify an appropriate schedule in which a task or a job defined in association with an operator or an object may be executed.

Japanese Laid-open Patent Publication No. 2022-52222, Japanese Laid-open Patent Publication No. 2023-56471, U.S. Patent Application Publication No. 2017/0116159, and U.S. Patent Application Publication No. 2017/0083873 are disclosed as related art.

SUMMARY

TECHNICAL PROBLEM

In a solution search based on the MCMC method, it may take time to obtain a more appropriate solution since a state transition is not continuously adopted or only a specific state is adopted.

In one aspect, an object of the present disclosure is to improve solution-finding performance.

SOLUTION TO PROBLEM

According to an aspect of the embodiments, there is provided a data processing program including instructions which, when executed by a computer, cause the computer to execute a process including: selecting, in a solution search based on an evaluation function which includes a plurality of state variables, the solution search that is performed by using a plurality of replicas which respectively indicate values of the plurality of state variables and which correspond to a plurality of temperature values, when the number of times a first state indicated by the values of the plurality of state variables occurs within a predetermined time in a first replica among the plurality of replicas exceeds a predetermined number of times, a predetermined number of replicas from the plurality of replicas by prioritizing a replica with a low difference in temperature value from a first temperature value which corresponds to the first replica; acquiring a second state to be compared with the first state, based on a state acquired by the solution search in each of the predetermined number of replicas; determining the number of state variables of which values are to be changed, among the plurality of state variables in the first state, in accordance with comparison between a first value of the evaluation function which corresponds to the first state and a second value of the evaluation function which corresponds to the second state; generating a third state in which the values of the number of state variables among the plurality of state variables in the first state are changed; and continuing the solution search in the first replica by using the third state.

ADVANTAGEOUS EFFECTS OF INVENTION

In one aspect, solution-finding performance may be improved.

BRIEF DESCRIPTION OF DRAWINGS

FIG. 1 is a diagram describing a data processing apparatus according to a first embodiment;
FIG. 2 is a diagram illustrating a hardware example of a data processing apparatus according to a second embodiment;
FIG. 3 is a diagram illustrating an example of a relationship between a state and energy;
FIG. 4 is a diagram illustrating a function example of the data processing apparatus;
FIG. 5 is a diagram illustrating a function example of a replica processing unit;
FIG. 6 is a flowchart illustrating a solution search example of the replica processing unit;
FIG. 7 is a flowchart illustrating an exchange control example;
FIG. 8 is a flowchart illustrating a first determination example of a reference;
FIG. 9 is a flowchart illustrating a second determination example of the reference;
FIG. 10 is a flowchart illustrating a third determination example of the reference;
FIG. 11 is a diagram illustrating a generation example of a reference state by majority vote; and
FIG. 12 is a diagram illustrating a generation example of a candidate state of a transition destination.

DESCRIPTION OF EMBODIMENTS

Hereinafter, the present embodiments will be described with reference to the drawings.

[First Embodiment]

A first embodiment will be described.

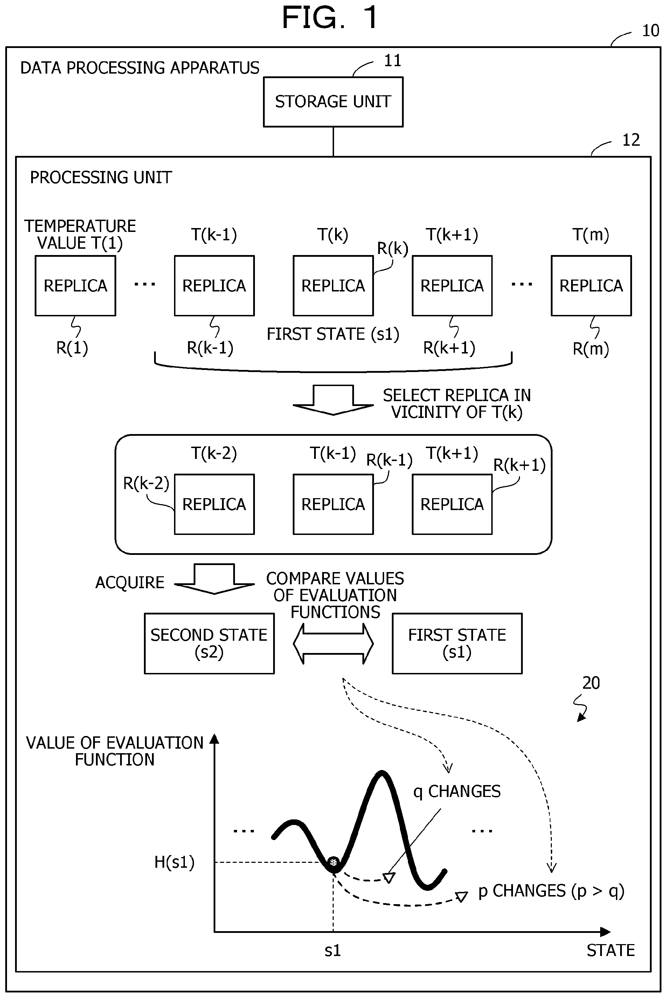

FIG. 1 is a diagram describing a data processing apparatus according to the first embodiment.
A data processing apparatus 10 is used for solution finding of a combinatorial optimization problem based on an MCMC method. A replica exchange method is used to solve the combinatorial optimization problem. The replica exchange method is also referred to as an exchange Monte Carlo method, a parallel tempering method, or the like. The data processing apparatus 10 includes a storage unit 11 and a processing unit 12.
The storage unit 11 may be a volatile semiconductor memory such as a random-access memory (RAM) or may be a non-volatile storage such as a hard disk drive (HDD) or a flash memory. For example, the processing unit 12 is a processor such as a central processing unit (CPU), a graphics processing unit (GPU), or a digital signal processor (DSP). The processing unit 12 may include an application specific electronic circuit such as an application-specific integrated circuit (ASIC) or a field-programmable gate array (FPGA). The processing unit 12 may be a processor that executes a program stored in a memory such as a RAM (which may be the storage unit 11). A set of a plurality of processors may be referred to as a "multiprocessor" or simply a "processor".
In the following description, an example is given in which the processing unit 12 searches for a solution. Meanwhile, a search unit realized by an FPGA, a GPU, or the like may search for a solution according to an instruction from the processing unit 12, and return a search result to the processing unit 12. In such case, the search unit may be included in the data processing apparatus 10, or may be included in another apparatus that communicates with the data processing apparatus 10.
A combinatorial optimization problem is formulated by a predetermined evaluation function, and is replaced with, for example, a problem that minimizes a value of the evaluation function, for example, an evaluation value. The evaluation function may be referred to as an objective function or an energy function. The evaluation function includes a plurality of state variables. For example, a state variable is a binary variable that takes a value of 0 or 1. A value that may be taken by the state variable may be {1, -1}, or may be another real number. The state variable may also be referred to as a bit or a spin.
A solution to a combinatorial optimization problem is represented by the values of a plurality of state variables. A value of the evaluation function indicates energy of an Ising model. A solution that minimizes the value of the evaluation function represents a ground state of the Ising model, and corresponds to an optimal solution to a combinatorial optimization problem.
For example, an Ising-type evaluation function is represented by formula (1).

$$H(\boldsymbol{s}) = -\sum_{i=1}^{N}\sum_{j=1}^{N} W_{ij}s_i s_j - \sum_{i=1}^{N} b_i s_i \qquad (1)$$

A state vector s has a plurality of state variables as elements, and represents a state of an Ising model. Formula (1) is an evaluation function formulated in a quadratic unconstrained binary optimization (QUBO) format. In a case of a problem of maximizing energy, a sign of the evaluation function may be reversed. Meanwhile, the evaluation function does not have to be in a quadratic form, and may be in a cubic or higher form.

A first term on the right side of formula (1) is obtained by integrating a product of values of two state variables and a weight coefficient without omission and duplication for all combinations of two state variables that are selectable from all state variables. Subscripts i and j are indices of the state variables. $s_i$ is an i-th state variable. $s_j$ is a j-th state variable. N is the total number of state variables. $W_{ij}$ is a weight between the i-th state variable and the j-th state variable or a coupling coefficient indicating a strength of coupling. $W_{ij} = W_{ji}$, and $W_{ii} = 0$.

A second term on the right side of formula (1) is a sum of a product of a value of the state variable and a bias for each of all the state variables. $b_i$ indicates a bias for the i-th state variable. Problem information including the weight coefficient, the bias, and the like included in the evaluation function is stored in the storage unit 11.

When the value of state variable $s_i$ changes to $1 - s_i$, the increase amount of state variable $s_i$ may be represented as $\Delta s_i = (1 - s_i) - s_i = 1 - 2s_i$. Therefore, the change amount $\Delta H_i$ of energy by a change in state variable $s_i$ for evaluation function H(s) is represented by formula (2).

$$
\begin{aligned}
\Delta H_i &= H(\boldsymbol{s})\Big|_{s_i \to 1-s_i} - H(\boldsymbol{s}) \\
&= -\Delta s_i \left( \sum_j W_{ij} s_j + b_i \right) \\
&= -\Delta s_i h_i \\
&= \begin{cases} -h_i & for \ \ s_i = 0 \to 1 \\ +h_i & for \ \ s_i = 1 \to 0 \end{cases}
\end{aligned}
\tag{2}
$$

$h_i$ is referred to as a local field, and is represented by formula (3). The local field may also be referred to as a local field (LF).

$$
h_i = \sum_j W_{ij} s_j + b_i
\tag{3}
$$

According to formula (2), when the signs of $\Delta s_i$ and $(\Sigma W_{ij} s_j + b_i)$ coincide with each other, the energy decreases. For example, the processing unit 12 calculates, for each of a plurality of state variables, the change amount of energy by a change in value of one state variable among the plurality of state variables, and stochastically and preferentially accepts the change with which energy decreases.

At this time, in a case of falling into a local solution, it is impossible to escape from the local solution with a steepest descent method. Accordingly, the processing unit 12 uses a Metropolis method or a Gibbs method for determination of a probability of transition from a certain state to a next state due to changing of a certain state variable. For example, the processing unit 12 also stochastically allows a change in which the value of an evaluation function increases, according to comparison between the change amount of the value of the evaluation function and a thermal noise value. The thermal noise value is obtained based on a temperature value or a random number. As the temperature value increases, an amplitude of the thermal noise value increases. As the amplitude of the thermal noise value increases, a state transition with a large increase amount of the value of the evaluation function is more likely to be allowed.

For example, in the case of the Metropolis method, a probability $A_i$ of accepting a change in the value of a state variable of an energy change $\Delta H_i$ is represented as $A_i = \min[1, \exp(-\beta \cdot \Delta H_i)]$. $\beta$ is a reciprocal number of a temperature value T (T > 0) ($\beta = 1/T$), and is referred to as an inverse temperature. The min operator indicates that a minimum value of argument is taken.

The processing unit 12 compares a uniform random number u satisfying $0 < u < 1$ with $A_i$ for a certain index i, and when $u < A_i$, accepts a change in the value of state variable $s_i$ and changes the value of state variable $s_i$. Unless $u < A_i$, the processing unit 12 does not accept a change in the value of state variable $s_i$ and does not change the value of state variable $s_i$. According to the formula of the probability $A_i$, as $\Delta H_i$ has a larger value, $A_i$ is smaller. As $\beta$ is smaller, for example, T is larger, a state transition in which $\Delta H_i$ is large is more likely to be allowed.

For example, in the case where the Metropolis method is used, the processing unit 12 may perform transition determination by using a determination formula of $\ln(u) * T \leq -\Delta H_i$. $\ln(u) * T$ corresponds to a thermal noise value. The processing unit 12 allows a change in the value of a corresponding state variable in a case where energy change $\Delta H_i$ satisfies the determination formula for the uniform random number u. The processing unit 12 does not allow a change in the value of a corresponding state variable in a case where the energy change $\Delta H_i$ does not satisfy the determination formula for the uniform random number u.

In the replica exchange method, the processing unit 12 repeats a procedure of independently executing MCMC for each of a plurality of temperature values, exchanging the states obtained at each temperature value at a predetermined timing, and continuing MCMC with the exchanged states as initial solutions, and extracts an appropriate solution obtained in a process. A set of a plurality of state variables corresponding to one temperature value is referred to as a replica. Meanwhile, the replica may indicate one unit of an arithmetic operation resource that handles the plurality of state variables corresponding to one temperature value. According to the replica exchange method, a plurality of replicas corresponding to a plurality of temperature values are used. Exchange of states at a predetermined timing is stochastically performed for a pair of replicas having adjacent temperature values.

Hereinafter, it is assumed that the number of plurality of replicas is m. For example, m may be an integer of 3 or more. According to the first embodiment, it is assumed that the plurality of replicas are represented by, for example, replicas R(1), ..., R(k-1), R(k), R(k+1), ..., and R(m). The numbers "1, ..., k, ..., and m" in parentheses after "R" are indices for identifying a replica. Temperature values corresponding to the replicas R(1), ..., R(k-1), R(k), R(k+1), ..., and R(m) are temperature values T(1), ..., T(k-1), T(k), T(k+1), ..., and T(m). The temperature values T(1), ..., T(k-1), T(k), T(k+1), ..., and T(m) are determined in advance. For example, the numbers "1, ..., k, ..., and m" in parentheses after "T" are indices for identifying a temperature value. As the index is larger, the temperature value may be larger, or as the index is larger, the temperature value may be smaller.

For each of the plurality of replicas, the processing unit 12 saves a history of states and energies acquired in a process of a solution search in the storage unit 11. For example, the processing unit 12 may save, in the storage unit 11, the lowest energy state among the states obtained from a start time point of the solution search to the current time point for each of the plurality of replicas.

In a case of falling into a local solution at a certain replica in the solution search by the processing unit 12, state transition is delayed in the replica, and it may take time until an optimal solution or an approximate solution close to the optimal solution is obtained in the plurality of replicas as a whole. Accordingly, the processing unit 12 performs the following process in the solution search by the replica exchange method.

The processing unit 12 detects that the number of times a first state indicated by values of a plurality of state variables occurs within a predetermined time in a first replica exceeds a predetermined number of times. The predetermined time is determined in advance. Detection of the number of times of occurrence of the first state within the predetermined time exceeding the predetermined number of times may also be referred to as detection of the number of times of occurrence of the first state per unit time, for example, an occurrence frequency, exceeding a predetermined value. One time of occurrence of the first state is that a state after one time of a trial of a state transition in a solution search is the first state. At this time, a state before the one time of the trial may be the first state or a state different from the first state.

For example, the processing unit 12 may count the number of times the state transition is not continuously adopted, for example, the number of times of continuous rejection, and perform detection of the number of times of occurrence of the first state within a predetermined time exceeding a predetermined number of times, according to whether the number of times of continuous rejection exceeds the predetermined number of times. In this case, the first state occurs for the number of times of a trial corresponding to the number of times of continuous rejection. A time spent for the number of times of a trial corresponding to the predetermined number of times corresponds to the predetermined time.

Alternatively, in a case where a certain replica transitions to the first state, when the first state occurs again within a predetermined time from a timing of the transition, the processing unit 12 may detect that the number of times of occurrence exceeds the predetermined number of times by counting the number of times of occurrence.

In the solution search, in a case where the number of times the first state occurs in the certain replica within the predetermined time exceeds the predetermined number of times, the first state is estimated to be a local solution. Accordingly, the processing unit 12 may detect that the first replica falls into the local solution by detecting that the number of times the first state occurs within the predetermined time exceeds the predetermined number of times.

Upon detecting that the number of times the first state occurs within the predetermined time in the first replica exceeds the predetermined number of times, the processing unit 12 performs the next process. The processing unit 12 selects a predetermined number of replicas from a plurality of replicas by prioritizing a replica having a small difference in temperature value from a first temperature value corresponding to the first replica.

It is assumed that the replica R(k) is an example of the first replica. A state s1 of the replica R(k) is an example of the first state. In this case, the temperature value T(k) corresponding to the replica R(k) is an example of the first temperature value. It is assumed that the processing unit 12 detects that the number of times the state s1 occurs in the replica R(k) within a predetermined time exceeds a predetermined number of times. The processing unit 12 selects a predetermined number of replicas from the replicas R(1), ..., R(k-1), R(k), R(k+1), ..., and R(m) by prioritizing a replica having a small difference in temperature value from the temperature value T(k). At this time, the processing unit 12 may exclude the replica R(k) falling into the local solution from selection candidates. For example, the processing unit 12 may select a predetermined number of replicas from replicas other than the first replica, among the plurality of replicas. The predetermined number, for example, the number of replicas to be selected is determined in advance. The predetermined number may be 2 or more. In the example of the first embodiment, it is assumed that the predetermined number is 3. In a case where two replicas having the same difference in temperature value from the temperature value T(k) are included in the selection candidates, the processing unit 12 may select a replica according to a predetermined selection criterion in which a priority is given to a smaller index or a larger index between the two replicas.

For example, the processing unit 12 selects the three replicas R(k-2), R(k-1), and R(k+1) corresponding to the temperature values T(k-2), T(k-1), and T(k+1) in the vicinity of the temperature value T(k).

Based on the states acquired by the solution search up to the current time point in each of the predetermined number of selected replicas, the processing unit 12 acquires a second state to be compared with the first state. Examples of a method of acquiring the second state include the following method.

As a first example, the processing unit 12 may acquire, as the second state, a state in which a value of an evaluation function is the lowest among the current states of the predetermined number of selected replicas.

As a second example, the processing unit 12 may acquire, as the second state, a state in which the value of the evaluation function is the lowest among states acquired from a start of the solution search to the current time point, for the predetermined number of selected replicas.

As a third example, the processing unit 12 may generate the second state by setting a value obtained by majority vote of values of state variables corresponding to the same index in the current states of the predetermined number of selected replicas as the value of the state variable of the index in the second state. In this case, the processing unit 12 sets the number of predetermined number of replicas selected from the plurality of replicas to an odd number.

In the third example, for each of the predetermined number of selected replicas, the processing unit 12 may acquire, for each replica, a state having the lowest value of the evaluation function among the states acquired from the start of the solution search to the current time point. For the states acquired for each of the predetermined number of replicas, the processing unit 12 may generate a second state by setting a value obtained by majority vote of values of state variables corresponding to the same index as a value of the state variable of the index in the second state.

For example, the processing unit 12 acquires a state s2 as the second state by any of the methods of the first to third examples described above, based on the states acquired by the three selected replicas R(k-2), R(k-1), and R(k+1).

According to a comparison between a first value of an evaluation function corresponding to the first state and a second value of an evaluation function corresponding to the second state, the processing unit 12 determines the number of state variables of which values are to be changed, among the plurality of state variables in the first state. Among the plurality of state variables in the first state, the processing unit 12 generates a third state in which values of the determined number of state variables are changed.

For example, in a case where the first state is the state s1, a first value is H(s1). In a case where the second state is the state s2, a second value is H(s2).

For example, the processing unit 12 determines whether or not the first value H(s1) is less than the second value H(s2). In a case where the first value H(s1) is less than the second value H(s2), the processing unit 12 determines the number of state variables of which values are to be changed as a first number p. By contrast, in a case where the first value H(s1) is equal to or more than the second value H(s2), the processing unit 12 determines a second number q less than the first number p as the number of state variables of which the values are to be changed. p is an integer equal to or more than 2. q is a natural number less than p.

As an example, the processing unit 12 sets the first number p = N/2 in a case where a number M of state variables having different values in the first state (s1) and the second state (s2) is equal to or more than half the number N of the plurality of state variables, and sets the first number p = M in a case where M is less than N/2. At this time, M is expected to be a number more than 2. For example, in a case of M ≥ N/2, the processing unit 12 randomly selects p = N/2 among the state variables having different values in the first state and the second state, and generates the third state by inverting a value of the selected state variable in the first state. In a case where M < N/2, all of M state variables having different values in the first state and the second state are selected, and the value of the selected state variable is inverted in the first state to generate the third state.

By contrast, the processing unit 12 sets the second number q to a fixed value "2". In a case where q = 2 is adopted, the processing unit 12 randomly selects two of the state variables having different values in the first state and the second state, and generates the third state by inverting a value of the selected state variable in the first state.

The generation example of the third state described above is an example, and another method may be used. As another example, in a case of H(s1) < H(s2), the processing unit 12 may randomly select p state variables determined in advance from the first state (s1), and may generate the third state by inverting values of the p state variables. In a case of H(s1) ≥ H(s2), the processing unit 12 may randomly select q state variables determined in advance from the first state (s1), and may generate the third state by inverting values of the q state variables.

A graph 20 illustrates a relationship between a state and a value of an evaluation function. A horizontal axis of the graph 20 indicates a state represented by a plurality of state variables. A vertical axis of the graph 20 is a value of the evaluation function. Although the state is multi-dimensionally represented by values of the plurality of state variables, the horizontal axis is associated with the state in the graph 20 for convenience.

In the case of H(s1) < H(s2), it is estimated that an energy mountain of around the state s1 is relatively large, and it is estimated that there is a high possibility that the energy may not escape from the state s1 unless the state is moved to a state farther away from the state s1. Therefore, in the case where H(s1) < H(s2), the processing unit 12 changes the values of p state variables more than q among the plurality of state variables in the state s1 to set the state to the third state. A distance between the state s1 and the other state may be evaluated by, for example, the number of state variables having different values between both states, for example, a Hamming distance.

By contrast, in the case of H(s1) ≥ H(s2), it is estimated that the energy mountain around the state s1 is relatively small, and it is estimated that there is a high possibility that the energy may escape from the state s1 and a more appropriate state is reached by moving slightly from the state s1. Therefore, in the case of H(s1) ≥ H(s2), the processing unit 12 changes the values of q state variables less than p among the plurality of state variables in the state s1, and sets the state as the third state. For example, in the case of H(s1) ≥ H(s2), the processing unit 12 may reduce a possibility of missing a more appropriate state in the vicinity of the state s1 by changing the values of q state variables less than p.

By using the third state, the processing unit 12 continues the solution search in the first replica. For example, the processing unit 12 generates the third state by forcibly updating the values of p or q state variables among the plurality of state variables included in the state s1, for the current state s1 estimated as the local solution in the replica R(k). From the third state, the processing unit 12 restarts the solution search at the replica R(k). Even in a case where it is detected that the replica R(k) falls into the local solution, the processing unit 12 may continuously perform the solution search with another replica.

After performing the solution search using the plurality of replicas by the replica exchange method for a certain period of time, the processing unit 12 outputs, as a final solution, a state in which the value of the evaluation function is the lowest among states obtained by the solution search, for example, a state with the lowest energy. Among the states obtained by the solution search, the processing unit 12 may output a predetermined number of states as the final solutions by prioritizing a state having a low value of the evaluation function.

In this manner, according to the data processing apparatus 10, the solution search is performed based on the evaluation function including the plurality of state variables, each indicating the values of the plurality of state variables, and the solution search is performed by using the plurality of replicas corresponding to the plurality of temperature values. In the solution search, it is detected that the number of times the first state indicated by the values of the plurality of state variables occurs within the predetermined time in the first replica exceeds the predetermined number of times. The predetermined number of replicas are selected from the plurality of replicas by prioritizing a replica having a small difference in temperature value from the first temperature value corresponding to the first replica. Based on the state acquired by the solution search in each of the predetermined number of replicas, the second state to be compared with the first state is acquired. According to the comparison between the first value of the evaluation function corresponding to the first state and the second value of the evaluation function corresponding to the second state, the number of state variables of which values are to be changed is determined, among the plurality of state variables in the first state. The third state is generated in which the values of the number of state variables among the plurality of state variables in the first state are changed. By using the third state, the solution search in the first replica is continued.

Accordingly, the data processing apparatus 10 may improve solution-finding performance. By selecting the predetermined number of replicas from the plurality of replicas by prioritizing a replica having a small difference in temperature value from the first temperature value corresponding to the first replica, the data processing apparatus 10 may appropriately acquire the second state.

When the difference between the temperature values of the first replica and the other replica is too large, there is a high possibility that a deviation between the values of the evaluation functions of the states that may be taken by both replicas increases. Therefore, when the second state is acquired by using a replica having a relatively large difference in temperature value from the first replica, there is a possibility that a magnitude of the mountain of the evaluation function around the first state may not be appropriately evaluated by comparing the first value and the second value.

Accordingly, the data processing apparatus 10 preferentially selects a replica having a small difference in temperature value from the first temperature value corresponding to the first replica. Accordingly, the data processing apparatus 10 may select another replica taking a state in which the deviation of the value of the evaluation function is relatively small with respect to the first state in the first replica as an acquisition source of the second state. As a result, the data processing apparatus 10 may appropriately evaluate the magnitude of the mountain of the evaluation function around the first state by comparing the first value and the second value. Therefore, the data processing apparatus 10 may appropriately determine the number of state variables to be updated to escape from the first state, for example, the local solution in the first replica by comparing the first value and the second value, and may generate the third state.

By continuing the solution search for the first replica using the third state obtained in this manner, the data processing apparatus 10 may efficiently escape from the first state, for example, the local solution, in the first replica. As a result, the data processing apparatus 10 may acquire a more appropriate solution at high speed for the plurality of replicas as a whole.

[Second Embodiment]

Next, a second embodiment will be described.

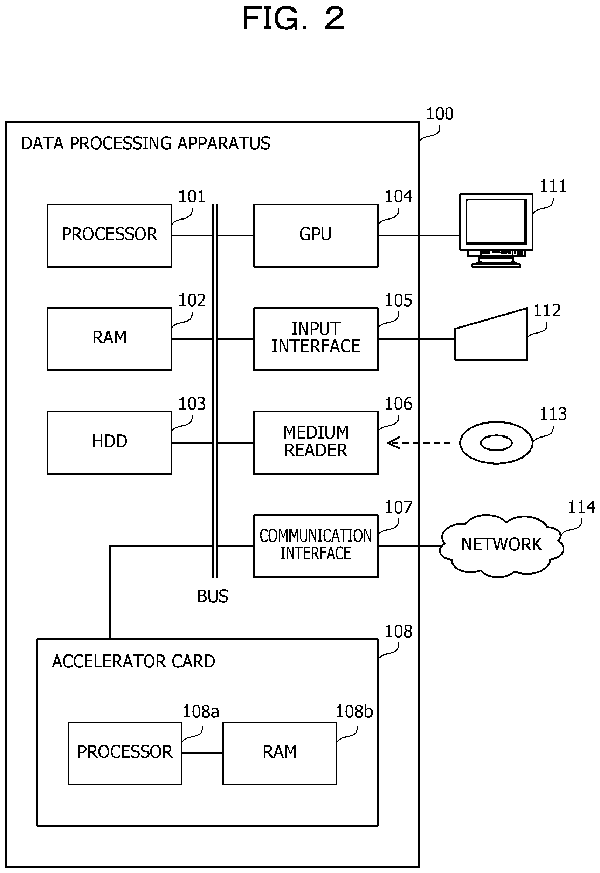

FIG. 2 is a diagram illustrating a hardware example of a data processing apparatus of the second embodiment.

A data processing apparatus 100 includes a processor 101, a RAM 102, an HDD 103, a GPU 104, an input interface 105, a medium reader 106, a communication interface 107, and an accelerator card 108. These units included in the data processing apparatus 100 are coupled to a bus inside the data processing apparatus 100.

The processor 101 is an arithmetic device that executes instructions of a program. For example, the processor 101 is a CPU. The processor 101 loads at least a part of a program or data stored in the HDD 103 into the RAM 102, and executes the program. The processor 101 may include a plurality of processor cores. The data processing apparatus 100 may include a plurality of processors. The processing to be described below may be executed in parallel by using a plurality of processors or processor cores. A set of the plurality of processors may be referred to as a "multiprocessor" or simply a "processor". The processor may also be referred to as a "processor circuitry".

The RAM 102 is a volatile semiconductor memory that temporarily stores a program to be executed by the processor 101 and data to be used for arithmetic operation by the processor 101. The data processing apparatus 100 may include a memory of a type other than the RAM, and may include a plurality of memories.

The HDD 103 is a non-volatile storage device that stores data and programs of software such as an operating system (OS), middleware, and application software. The data processing apparatus 100 may include other types of storage devices such as a flash memory or a solid-state drive (SSD), and may include a plurality of non-volatile storage devices.

The GPU 104 outputs an image to a display 111 coupled to the data processing apparatus 100 in accordance with an instruction from the processor 101. As the display 111, an arbitrary type of display such as a cathode ray tube (CRT) display, a liquid crystal display (LCD), a plasma display, or an organic electro-luminescence (OEL) display may be used.

The input interface 105 acquires an input signal from an input device 112 coupled to the data processing apparatus 100, and outputs the input signal to the processor 101. As the input device 112, a pointing device such as a mouse, a touch panel, a touchpad, or a trackball, a keyboard, a remote controller, a button switch, or the like may be used. A plurality of types of input devices may be coupled to the data processing apparatus 100.

The medium reader 106 is a reading device that reads programs and data recorded in a recording medium 113. As the recording medium 113, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a Digital Versatile Disc (DVD).

For example, the medium reader 106 copies a program or data read from the recording medium 113 to another recording medium such as the RAM 102 or the HDD 103. For example, the read program is executed by the processor 101. The recording medium 113 may be a portable-type recording medium, and may be used to distribute programs and data. The recording medium 113 and the HDD 103 may be referred to as a computer-readable recording medium.

The communication interface 107 is coupled to a network 114, and communicates with another information processing apparatus via the network 114. The communication interface 107 may be a wired communication interface coupled to a wired communication device such as a switch or a router, or may be a wireless communication interface coupled to a wireless communication device such as a base station or an access point.

The accelerator card 108 is a hardware accelerator that searches for a solution to a problem represented by an Ising-type energy function of formula (1) by using the MCMC method. By performing the MCMC method at a fixed temperature or the replica exchange method in which the states of an Ising model are exchanged between a plurality of temperatures, the accelerator card 108 may be used as a sampler that samples a state following a Boltzmann distribution at the corresponding temperature. For solving a combinatorial optimization problem, the accelerator card 108 uses a replica exchange method. The replica exchange method is also referred to as an exchange Monte Carlo method or a parallel tempering method.

The replica exchange method is a method of independently executing the MCMC method using a plurality of temperature values. An independent arithmetic operation resource for executing the MCMC method is referred to as a replica. In the replica exchange method, states or temperature values are exchanged as appropriate for states obtained by a plurality of replicas corresponding to the plurality of temperature values. In the replica exchange method, an appropriate solution may be found efficiently by searching a narrow range of a state space by MCMC at a low temperature and searching a wide range of the state space by MCMC at a high temperature. In a case where the replica exchange method is used, the accelerator card 108 repeats the operation of performing trials of state transition for a plurality of replicas in parallel and, every time a certain number of times of a trial is performed, exchanging states or temperature values by a predetermined exchange probability for a pair of replicas with adjacent temperature values.

The accelerator card 108 includes a processor 108a and a RAM 108b. The processor 108a realizes a solution search function in the accelerator card 108. For example, the processor 108a is a dedicated processor for solution search such as a GPU, an FPGA, or an ASIC. The RAM 108b holds data to be used for a solution search in the processor 108a and a solution searched for by the processor 108a. The data processing apparatus 100 may include a plurality of accelerator cards.

Each of the RAM 102 and the RAM 108b may be a dynamic RAM (DRAM) or a static RAM (SRAM), or may include both of them. The processor 101 or the processor 108a corresponds to the processing unit 12 of the first embodiment. In a case where the processor 101 is an example of the processing unit 12, the processor 108a may be considered as an example of a search unit. The RAM 102 or the RAM 108b corresponds to the storage unit 11 of the first embodiment. The HDD 103 may correspond to the storage unit 11.

Hardware that searches for a solution to a problem in an Ising-format, such as the data processing apparatus 100 or the accelerator card 108, may be referred to as an Ising machine, a Boltzmann machine, or the like.

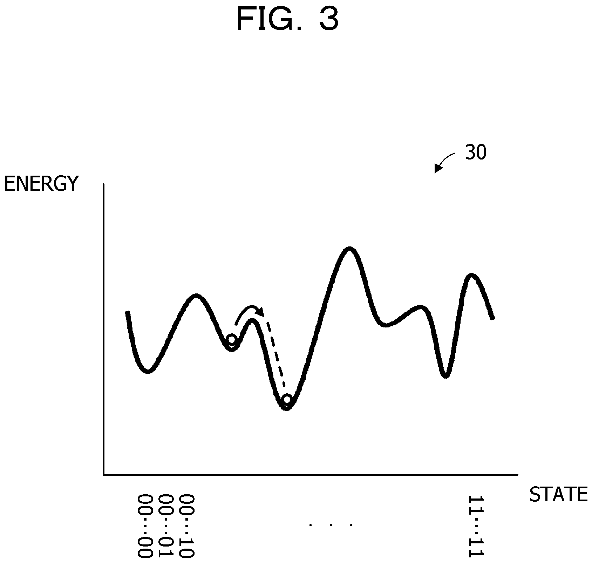

FIG. 3 is a diagram illustrating an example of a relationship between a state and energy.

A graph 30 illustrates an example of a relationship between a state represented by a plurality of bits and energy calculated by an energy function. A horizontal axis of the graph 30 indicates the state. A vertical axis of the graph 30 indicates the energy. Although states are represented in multiple dimensions by the plurality of bits, each state is plotted on the horizontal axis for convenience. A change amount of the energy function may be relatively small or relatively large in the vicinity of a certain state.

A Metropolis method, for example, is used to determine a probability of transition from a certain state to the next state by changing a certain state variable in a solution search of the data processing apparatus 100. For example, a search unit also stochastically allows a transition of increasing the energy, in accordance with a comparison between the change amount of energy and a thermal noise value. The thermal noise value is obtained based on a temperature value or a random number. As the temperature value increases, an amplitude of the thermal noise value increases. As the amplitude of the thermal noise value increases, a state transition with a large amount of increase in energy is more likely to be allowed. On the other hand, as the amplitude of the thermal noise value decreases, a state transition with a large amount of increase in energy is more less likely to be allowed.

In the data processing apparatus 100, when a certain replica falls into a local solution, a state transition in the replica may be delayed, and solution-finding performance may decrease. Accordingly, in a case where the certain replica falls into the local solution, the data processing apparatus 100 enables efficient escape from the local solution based on a state of another replica.

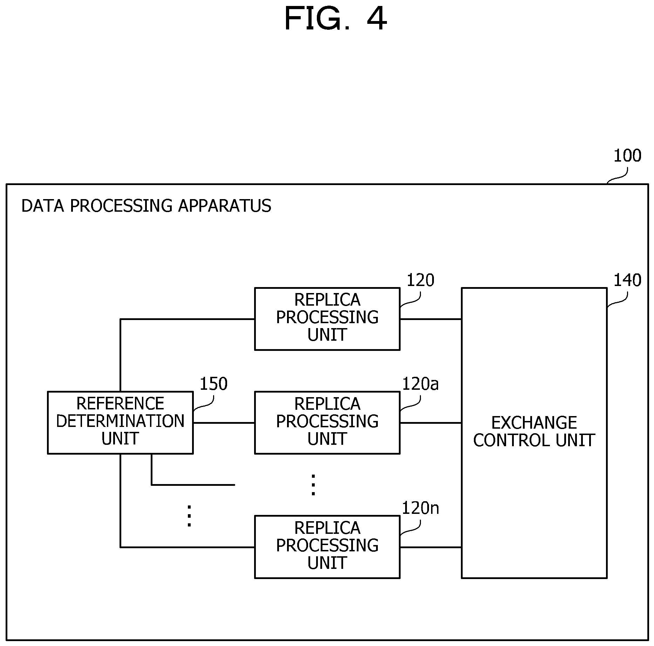

FIG. 4 is a diagram illustrating a function example of a data processing apparatus.

The data processing apparatus 100 includes replica processing units 120, 120a, ..., and 120n, an exchange control unit 140, and a reference determination unit 150. The replica processing units 120, 120a, ..., and 120n, and the exchange control unit 140 are realized by the processor 108a. The replica processing units 120, 120a, ..., and 120n, and the exchange control unit 140 may be realized by the processor 101 executing a program stored in the RAM 102.

The replica processing units 120, 120a, ..., and 120n are search units that execute MCMC respectively at different temperature values in solution finding of a combinatorial optimization problem. The temperature values different from each other are set in the replica processing units 120, 120a, ..., and 120n, respectively. For example, the highest temperature value is set for the replica processing unit 120, lower temperature values are set for the replica processing units 120a, ..., and 120n in this order, and the lowest temperature value is set for the replica processing unit 120n. The replica processing units 120, 120a, ..., and 120n execute MCMC in parallel independently from each other. The replica processing unit may be simply referred to as a replica.

At a predetermined timing, the exchange control unit 140 controls an exchange of states between a pair of replica processing units for which adjacent temperature values are set. After the state exchange is performed in a certain pair of replica processing units, the replica processing units restart a solution search using the exchanged state as a starting point, for example, a trial of state transition by MCMC. For a pair of replica processing units having adjacent temperature values, the exchange control unit 140 may exchange temperature values instead of states.

For example, the data processing apparatus 100 performs a solution search for a certain period of time using the replica processing units 120, 120a, ..., and 120n, and the exchange control unit 140, and outputs a solution (state) with the lowest energy obtained by the solution search as a final solution.

For each of the replica processing units 120, 120a, ..., and 120n, in a case of falling into a local solution in a certain replica processing unit, the reference determination unit 150 determines a state $s_r$ of a reference to be compared with the state of the replica processing unit. The state $s_r$ of the reference is used for a process of determining the number of bits to be forcibly inverted to escape from the local solution in the corresponding replica processing unit.

For example, in a case where a certain replica processing unit falls into a local solution, the reference determination unit 150 selects the predetermined number of replica processing units having a small difference in temperature value from the replica processing unit. At this time, the reference determination unit 150 may exclude the replica processing unit falling into the local solution from selection candidates. Two replicas having the same difference in temperature value from the replica processing unit falling into the local solution may be included in the selection candidates. In this case, the reference determination unit 150 may select a replica processing unit based on a predetermined selection criterion in which a priority is given to a smaller index or a larger index between the indices.

Based on a state of each of the predetermined number of selected replica processing units, the reference determination unit 150 determines the state sr of the reference.

For example, the reference determination unit 150 sets the lowest energy state among the respective current states of the predetermined number of selected replica processing units as the state sr of the reference.

Alternatively, the reference determination unit 150 may set, as the state sr of the reference, a state having the lowest energy among states having the lowest energy obtained by each of the predetermined number of selected replica processing units up to the current time point.

Alternatively, the reference determination unit 150 may set, as the state sr of the reference, a state obtained by majority vote of values of corresponding bits in the respective current states of the predetermined number of selected replica processing units.

The reference determination unit 150 supplies the state sr of the reference and energy Hr = H(sr) corresponding to sr to the corresponding replica processing unit falling into the local solution. H(sr) is calculated based on formula (1).

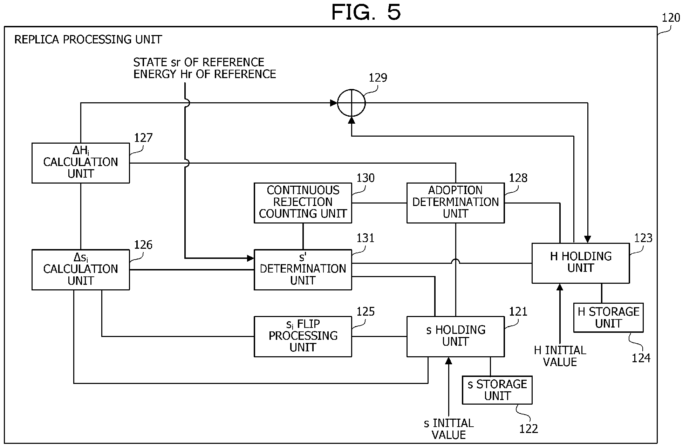

FIG. 5 is a diagram illustrating a function example of a replica processing unit.

The replica processing unit 120 includes an s holding unit 121, an s storage unit 122, an H holding unit 123, an H storage unit 124, a $s_i$ flip processing unit 125, a $\Delta s_i$ calculation unit 126, a $\Delta H_i$ calculation unit 127, an adoption determination unit 128, an addition unit 129, a continuous rejection counting unit 130, and a s' determination unit 131.

A storage region of the RAM 108b is used for the s storage unit 122 and the H storage unit 124. The processor 108a realizes the s holding unit 121, the H holding unit 123, the $s_i$ flip processing unit 125, and the $\Delta s_i$ calculation unit 126, the $\Delta H_i$ calculation unit 127, the adoption determination unit 128, the addition unit 129, the continuous rejection counting unit 130, and the s' determination unit 131.

The s holding unit 121 acquires an initial value of a state s input by a user, and stores the initial value in the s storage unit 122. When receiving the determination result indicating that flipping on a target bit is to be adopted by the adoption determination unit 128, the s holding unit 121 updates the state s by flipping the target bit stored in the s storage unit 122. In the example of FIG. 5, the state s indicates a state of the replica processing unit 120. Although a state of each replica processing unit is distinguished by the replica number m as in s(m), the state of the replica processing unit 120 is simply represented as s herein. The s holding unit 121 supplies the current state s stored in the s storage unit 122 to the $s_i$ flip processing unit 125, the $\Delta s_i$ calculation unit 126, and the s' determination unit 131.

The s storage unit 122 stores the state s.

The H holding unit 123 acquires an initial value of energy H corresponding to the state s input by a user, and stores the initial value in the H storage unit 124. When receiving the determination result indicating that the flip on the target bit is to be adopted by the adoption determination unit 128, the H holding unit 123 acquires a calculation result of H + $\Delta H_i$ by the addition unit 129, and updates the energy H stored in the H storage unit 124 to H = H + $\Delta H_i$. The H holding unit 123 supplies the current energy H stored in the H storage unit 124 to the addition unit 129 and the s' determination unit 131.

The H storage unit 124 stores the energy H corresponding to the state s. The energy H is a value calculated based on formula (1).

The $s_i$ flip processing unit 125 obtains a candidate state s' in which an i-th bit $s_i$ is flipped for the state s, and supplies the candidate state s' to the $\Delta s_i$ calculation unit 126. The candidate state s' is a state of a transition destination candidate for the state s. i may be selected in an order of the indices, or may be randomly selected.

The $\Delta s_i$ calculation unit 126 calculates a difference $\Delta s_i$ between the state s and the candidate state s', and supplies the difference $\Delta s_i$ to the $\Delta H_i$ calculation unit 127. In a case where a plurality of bits serve as flip candidates, the $\Delta s_i$ calculation unit 126 may calculate $\Delta s_i$ for each index i of the flip candidate.

The $\Delta H_i$ calculation unit 127 calculates $\Delta H_i$ based on formula (2), and supplies $\Delta H_i$ to the adoption determination unit 128 and the addition unit 129. In a case where the plurality of bits serve as the flip candidates, the $\Delta H_i$ calculation unit 127 calculates $\Delta H_i$ for each index i based on formulas (2) and (3), calculates $\Delta H_i$ in a case where the plurality of bits are flipped, and supplies $\Delta H_i$ to the adoption determination unit 128 and the addition unit 129.

Based on $\Delta H_i$, the adoption determination unit 128 performs an adoption determination of a state transition by the Metropolis method. As described before, in the Metropolis method, a probability $A_i$ of accepting a change in value of a state variable of the energy change $\Delta H_i$ is represented as $A_i$ = min[1, exp($-\beta \cdot \Delta H_i$)]. The adoption determination unit 128 supplies a result of the adoption determination to the s holding unit 121, the H holding unit 123, and the continuous rejection counting unit 130.

In a case where the plurality of bits serve as the flip candidates, the adoption determination unit 128 performs the adoption determination of the state transition by the Metropolis method based on $\Delta H$ in a case where the plurality of bits are flipped. Meanwhile, in a case where the plurality of bits serve as the flip candidates, the adoption determination unit 128 may determine to adopt the state transition by flipping the plurality of bits regardless of the adoption determination.

The addition unit 129 obtains the updated energy H' = H + $\Delta H_i$ by adding $\Delta H_i$ calculated by the $\Delta H_i$ calculation unit 127 and H supplied from the H holding unit 123, and supplies H' to the H holding unit 123. In a case where the plurality of bits are flipped, the addition unit 129 obtains the updated energy H' by adding $\Delta H$ in a case where the plurality of bits are flipped to H.

Based on the adoption determination result of the state transition by the adoption determination unit 128, the continuous rejection counting unit 130 counts the number of times the state transition is continuously rejected, for example, a continuous rejection count $\theta$num.

When the continuous rejection count $\theta$num reaches a threshold value $\theta$step, the s' determination unit 131 acquires the state sr of the reference and the energy Hr corresponding to sr from the reference determination unit 150, and determines the number of bits to be flipped next by comparing sr with the current state s. By inverting values of the determined number of bits among the plurality of bits in the current state s, the s' determination unit 131 generates the candidate state s'.

For example, the s' determination unit 131 compares the energy H(s) in the current state s with the energy Hr of the reference. In a case of H(s) < Hr, the s' determination unit 131 randomly selects x bits from among bits having values different from sr in the current state s. x is an integer equal to or more than 3. By contrast, in a case of the H(s) $\geq$ Hr, the s' determination unit 131 randomly selects y bits from among bits having different values of s and sr. y is an integer equal to or more than 2 and less than x. For the selected number (x or y) of bits, the s' determination unit 131 generates s' by applying a value of the corresponding bit in sr to the current state s.

As an example, when the total number of bits representing a state is denoted by N and the number of bits having a value different from sr in the current state s is denoted by M, the s' determination unit 131 sets x = N/2 in a case of M $\geq$ N/2 and sets x = M in a case of M < N/2. The s' determination unit 131 sets y = 2.

In a case where the continuous rejection count $\theta$num reaches the threshold value $\theta$step, the current state s is estimated to be a local solution. Therefore, when the s' determination unit 131 detects that the continuous rejection count $\theta$num reaches the threshold value $\theta$step, the determination unit may specify that the corresponding replica processing unit falls into the local solution in the solution search.

Next, a processing procedure of the data processing apparatus 100 will be described.

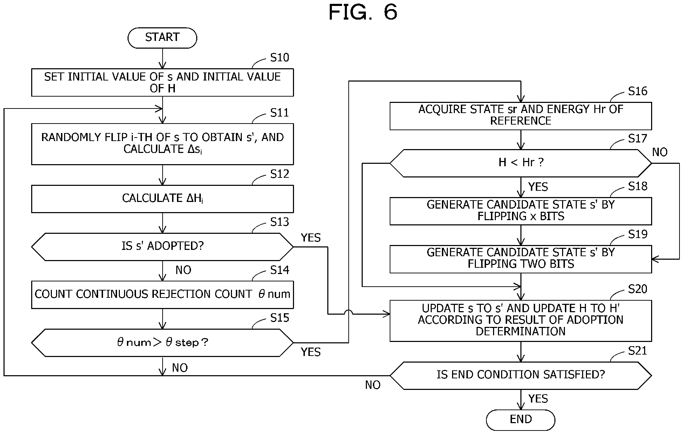

FIG. 6 is a flowchart illustrating a solution search example of a replica processing unit.

Although the process of the replica processing unit 120 is exemplified below, the replica processing units 120a, ..., and 120n also execute a procedure in the same manner as the procedure of the replica processing unit 120.

(S10) The s holding unit 121 sets an initial value of the state s. For example, the s holding unit 121 acquires the initial value of the state s input by a user, and stores the initial value in the s storage unit 122. The H holding unit 123 sets an initial value of the energy H. The initial value of the energy H is a value of formula (1) corresponding to the initial value of the state s. For example, the H holding unit 123 acquires the initial value of the energy H input by the user, and stores the initial value in the H storage unit 124. A temperature value corresponding to the replica processing unit 120 is also set in the adoption determination unit 128.

(S11) The $s_i$ flip processing unit 125 acquires the current state s from the s holding unit 121, and supplies the candidate state s' in which an i-th bit is randomly flipped for the state s, to the $\Delta s_i$ calculation unit 126. The $\Delta s_i$ calculation unit 126 calculates $\Delta s_i$ that is a difference between the state s and the candidate state s', and supplies $\Delta s_i$ to the $\Delta H_i$ calculation unit 127.

(S12) The $\Delta H_i$ calculation unit 127 calculates $\Delta H_i$ of formula (2) by using $\Delta s_i$.

(S13) The adoption determination unit 128 determines a transition to the candidate state s' based on $\Delta H_i$. For example, the Metropolis method is used for the transition determination. In a case where the transition to the candidate state s' is adopted, the process proceeds to step S20. In a case where the transition to candidate state s' is not adopted, for example, is rejected, the process proceeds to step S14.

(S14) The continuous rejection counting unit 130 counts the continuous rejection count $\theta$num, which is the number of times the transition is continuously rejected in step S13. In a case where step S14 is executed, the candidate state s' created in step S11 is discarded.

(S15) The s' determination unit 131 determines whether or not $\theta$num > $\theta$step is satisfied. In a case of $\theta$num > $\theta$step, the process proceeds to step S16. In a case of $\theta$num $\leq$ $\theta$step, the process proceeds to step S11.

(S16) The s' determination unit 131 acquires the state sr and the energy Hr of a reference from the reference determination unit 150.

(S17) The s' determination unit 131 determines whether or not the energy H in the current state of the replica processing unit 120 is less than the energy Hr of the reference, for example, whether or not H < Hr is satisfied. In a case of H < Hr, the process proceeds to step S18. In a case of H > Hr, the process proceeds to step S19.

(S18) The s' determination unit 131 generates the candidate state s' by flipping x bits. x is an integer more than 2. At this time, for example, the s' determination unit 131 specifies a bit having a value different from a value of the state sr of the reference in the current state s, randomly selects x bits among the specified bits, and inverts values of the x bits. The process proceeds to step S20.

(S19) The s' determination unit 131 generates the candidate state s' by flipping two bits. At this time, the s' determination unit 131 specifies, for example, a bit having a value different from the value of the state sr of the reference in the current state s, randomly selects two bits among the bits, and inverts the values of the two bits.

In a case where step S18 or step S19 is executed, $\Delta s_i$ corresponding to the candidate state s' created by the s' determination unit 131 is supplied to the $\Delta H_i$ calculation unit 127 for each index i via the $\Delta s_i$ calculation unit 126. Based on each $\Delta s_i$, the $\Delta H_i$ calculation unit 127 may calculate the difference $\Delta H$ in energy between the state s and the candidate state s'.

(S20) When a result of the adoption determination by the adoption determination unit 128 indicates adoption, the s holding unit 121 updates the current state s to the candidate state s'. For example, the s holding unit 121 stores the candidate state s' in the s storage unit 122 as the new state s. When the result of the adoption determination is adoption, the H holding unit 123 updates the current energy H to the energy H' corresponding to s'. For example, the H holding unit 123 stores the energy H' in the H storage unit 124 as the new energy H.

Even in a case where step S18 or step S19 is performed, the adoption determination unit 128 may perform the adoption determination by the Metropolis method or the like based on $\Delta H$. At this time, in a case where the adoption determination unit 128 determines that the candidate state s' is not adopted, step S18 or step S19 may be repeatedly executed until the candidate state s' is adopted. Alternatively, in a case where step S18 or step S19 is performed, the adoption determination unit 128 may determine to adopt the candidate state s', regardless of the adoption determination.

(S21) The $s_i$ flip processing unit 125 determines whether an end condition is satisfied. In a case where the end condition is satisfied, the process of the replica processing unit 120 ends. In a case where the end condition is not satisfied, the process proceeds to step S11. For example, the end condition is that the replica processing unit 120 has performed a certain number of times of a trial of flipping, that a certain period of time has elapsed from a start of the first trial, or the like.

More generally, in step S19, the s' determination unit 131 flips y $(x > y \geq 2)$ bits. A method different from the method exemplified in step S18 and S19 may be used to select x or y bits to be flipped.

For example, in step S18, the s' determination unit 131 may specify a bit having a value different from the value of the state sr of the reference in the current state s, and select x bits separated from each other as much as possible among the specified bits. As a difference in index between a certain bit and another bit is larger, both bits are more separated from each other. The s' determination unit 131 may specify a bit having a value different from the value of the state sr of the reference in the current state s, and may arbitrarily select x bits that are not adjacent to each other among the specified bits.

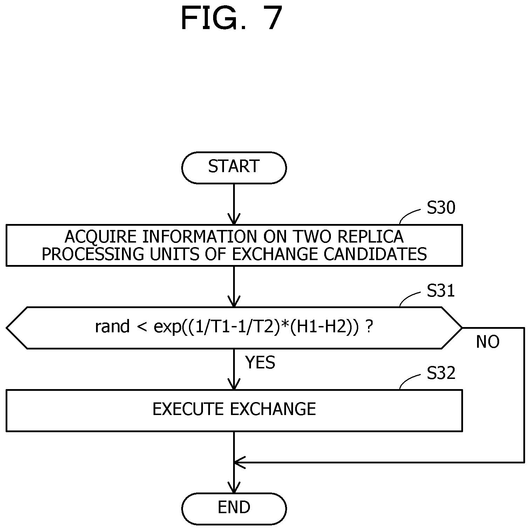

FIG. 7 is a flowchart illustrating an exchange control example.

At a predetermined timing in the repetition procedure in FIG. 6 by each replica processing unit, the exchange control unit 140 executes the following process. For example, the following process is executed for each pair of replica processing units with adjacent temperature values in an order of replica numbers for identifying each replica processing unit. For example, pairs of replica processing units to be subjected to exchange control are sequentially selected as in a pair of replica numbers (1, 2), a pair of replica numbers (2, 3), ....

(S30) The exchange control unit 140 acquires information on two replica processing units of exchange candidates. One of the two replica processing units is referred to as a replica R1, and the other is referred to as a replica R2. In this case, the information on the replica R1 includes a state of the replica R1 and information J1 accompanying the state of the replica R1, such as energy H1, a temperature value T1, and a local solution. The information on the replica R2 includes a state of the replica R2 and information J2 accompanying the state of the replica R2, such as energy H2, a temperature value T2, and a local solution.

(S31) The exchange control unit 140 determines whether a determination formula of rand < exp((1/T1 - 1/T2) * (H1 - H2)) is satisfied. rand is a random number value in a section [0, 1]. In a case where the determination formula is satisfied, the process proceeds to step S32. In a case where the determination formula is not satisfied, exchange control for the corresponding two replica processing units ends.

(S32) The exchange control unit 140 exchanges information other than the temperature values among the information acquired in step S30 for the corresponding two replica processing units. Accordingly, the pieces of information on the state s or the energy H held in the corresponding two replica processing units are exchanged. The exchange control for the corresponding two replica processing units ends.

In this manner, the exchange control unit 140 controls an exchange such that the exchange is stochastically performed by performing an exchange determination by a determination formula using the random number value rand.

When a solution search using each replica processing unit ends, the data processing apparatus 100 outputs the best solution obtained by the solution search, for example, the solution with the smallest energy, as a final solution. The data processing apparatus 100 may output a plurality of solutions by prioritizing solutions with low energy.

Next, an example of determining a reference state by the reference determination unit 150 will be described.

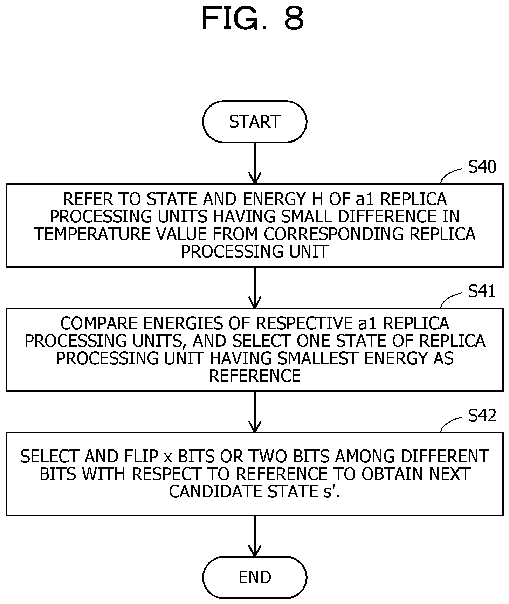

FIG. 8 is a flowchart illustrating a first determination example of a reference.

Steps S40 and S41 to be described below correspond to step S16 described above, and are executed by the reference determination unit 150. Although a case where the replica processing unit 120 falls into a local solution is exemplified below, the reference determination unit 150 may perform the same process on another replica processing unit even in a case where the replica processing unit falls into a local solution.

(S40) The reference determination unit 150 receives a reference acquisition request from the replica processing unit 120. For example, in a case where the s' determination unit 131 determines that the replica processing unit 120 falls into the local solution, the reference acquisition request is transmitted from the s' determination unit 131 to the reference determination unit 150. The reference determination unit 150 selects a1 single replica processing units having a small difference in temperature value from the corresponding replica processing unit 120, and refers to the state and the energy H of the selected a1 replica processing units. At this time, the reference determination unit 150 excludes the corresponding replica processing unit 120 from selection candidates. a1 is an integer equal to or more than 2, and is determined in advance.

(S41) The reference determination unit 150 compares energies of the respective a1 replica processing units, selects one state having the smallest energy among states of the a1 replica processing units, and sets the selected state as the state sr of a reference. Based on formula (1), the reference determination unit 150 calculates the energy Hr corresponding to the state sr of the reference. The reference determination unit 150 supplies the state sr and the energy Hr of the reference to the s' determination unit 131.

(S42) The s' determination unit 131 selects and flips x bits or 2 bits among different bits with respect to the reference in the current state s, in accordance with the comparison between the energy H and the energy Hr in the current state s, and sets the selected and flipped bit as the next candidate state s'. In the replica processing unit 120, the process proceeds to step S20.

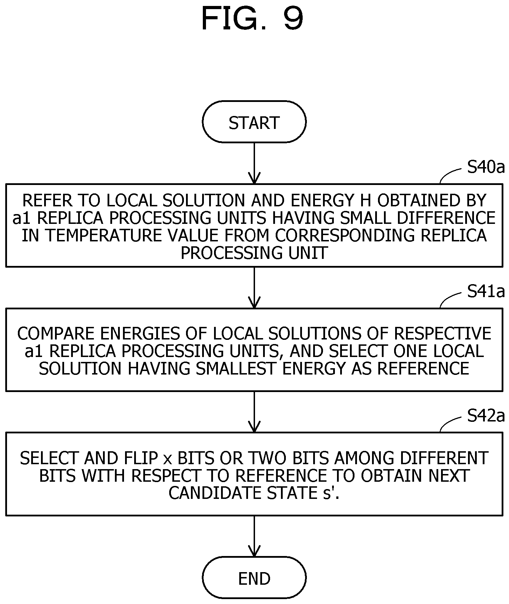

FIG. 9 is a flowchart illustrating a second determination example of the reference.

Steps S40a and S41a described below correspond to step S16 described above, and are executed by the reference determination unit 150. Although a case where the replica processing unit 120 falls into a local solution is exemplified below, the reference determination unit 150 may perform the same process on another replica processing unit even in a case where the replica processing unit falls into a local solution.

(S40a) The reference determination unit 150 receives a reference acquisition request from the replica processing unit 120. The reference determination unit 150 selects a1 single replica processing units having a small difference in temperature value from the corresponding replica processing unit 120, and refers to a local solution and the energy H obtained by the selected a1 replica processing units. The "local solution obtained by the a1 replica processing units" is the lowest energy state obtained by the replica processing unit among states obtained from a start of a solution search in each of the a1 single replica processing units to the current time point. The reference determination unit 150 excludes the corresponding replica processing unit 120 from selection candidates.

(S41a) The reference determination unit 150 compares energies of the local solutions of the respective a1 replica processing units, selects one local solution having the smallest energy, and sets the selected local solution as the reference state sr. Based on formula (1), the reference determination unit 150 calculates the energy Hr corresponding to the state sr of the reference. The reference determination unit 150 supplies the state sr and the energy Hr of the reference to the s' determination unit 131.

(S42a) The s' determination unit 131 selects and flips x bits or 2 bits among different bits with respect to the reference in the current state s, in accordance with the comparison between the energy H and the energy Hr in the current state s, and sets the selected and flipped bit as the next candidate state s'. In the replica processing unit 120, the process proceeds to step S20.

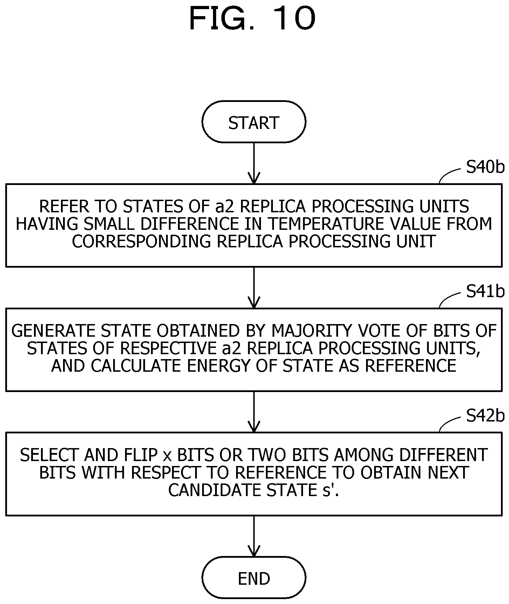

FIG. 10 is a flowchart illustrating a third determination example of the reference.

Steps S40b and S41b described below correspond to step S16 described above and are executed by the reference determination unit 150. Although a case where the replica processing unit 120 falls into a local solution is exemplified below, the reference determination unit 150 may perform the same process on another replica processing unit even in a case where the replica processing unit falls into a local solution.

(S40b) The reference determination unit 150 receives a reference acquisition request from the replica processing unit 120. The reference determination unit 150 selects a2 single replica processing units having a small difference in temperature value from the corresponding replica processing unit 120, and refers to the state and the energy H of the selected a2 replica processing units. At this time, the reference determination unit 150 excludes the corresponding replica processing unit 120 from selection candidates. a2 is an odd number equal to or more than 3, and is determined in advance.

(S41b) The reference determination unit 150 generates a state obtained by majority vote of bits of the states of the respective a2 replica processing units, calculates energy of the state by formula (1), and uses the energy as the reference. According to a method of majority vote of bits, in the a2 states, the number of bits "0" and "1" is counted for each index, and a larger number is adopted as a value of a bit of the index. The reference determination unit 150 determines a value of each bit by the majority vote, sets a set of the determined values of the bits as the reference state sr, and calculates the energy Hr corresponding to the state sr based on formula (1). The reference determination unit 150 supplies the state sr and the energy Hr of the reference to the s' determination unit 131.

(S42b) The s' determination unit 131 selects and flips x bits or 2 bits among different bits with respect to the reference in the current state s, in accordance with the comparison between the energy H and the energy Hr in the current state s, and sets the selected and flipped bit as the next candidate state s'. In the replica processing unit 120, the process proceeds to step S20.

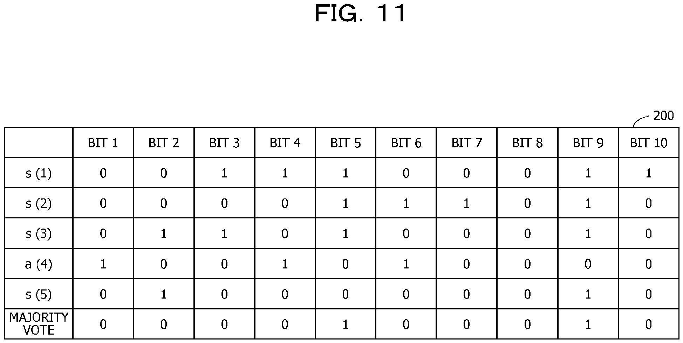

FIG. 11 is a diagram illustrating a generation example of a reference state by majority vote.

States s(1), s(2), s(3), s(4), and s(5) are states of five replica processing units selected by the reference determination unit 150 in a case where a certain replica processing unit falls into a local solution. As an example, it is assumed that the number of bits in the state is 10.

A table 200 illustrates an example of a value of each bit in the states s(1) to s(5) and results obtained by majority vote of bits having the same index. In FIG. 11, a number following "bit" represents an index of the bit. For example, "bit 1" is a bit of an index "1". It is assumed that an index of the largest digit in a bit string representing a state is 1, the index increases by 1 as the digit decreases, and an index of the smallest digit is "10".

For example, the state s(1) is "0011100011". The state s(2) is "0000111010". The state s(3) is "0110100010". The state s(4) is "1001010000". The state s(5) is "0100000010".

In this case, a result obtained by majority vote using bits having the same index is "0000100010". The reference determination unit 150 sets a state of the result obtained by performing the majority vote in this manner as the reference state sr, and obtains energy Hr = H(sr) corresponding to sr.

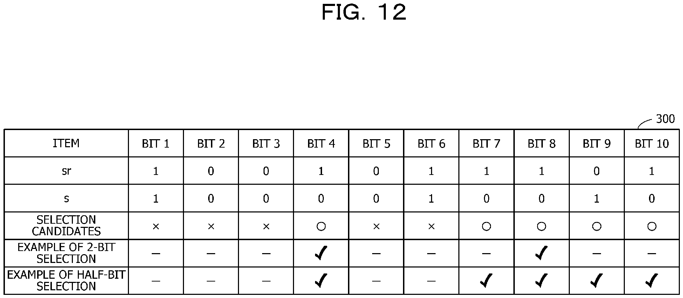

FIG. 12 is a diagram illustrating a generation example of a candidate state of a transition destination.

A table 300 illustrates an example of generating the candidate state s' of a transition destination by the s' determination unit 131, for the state sr of a reference and the current state s corresponding to a local solution of the replica processing unit 120. As an example, it is assumed that the number of bits in the state is 10.

For example, the state sr of the reference is "1001011101". The current state s is "1000010010". In this case, bits having different values between sr and s are five bits of indices "4", "7", "8", "9", and "10". The bits of these indices are selection candidates to be inverted. In the table 300, a circle mark is added to the bit of the selection candidate, and an X mark is added to a bit other than the selection candidate.

By inverting the bit of the selection candidate in the state s, the s' determination unit 131 generates the candidate state s'.

For example, in a case of H(s) ≥ Hr = H(sr), the s' determination unit 131 randomly selects and inverts two bits among the bits of the selection candidate. An example of the table 300 illustrates a case where the s' determination unit 131 selects and inverts two bits of the index "4" and the index "8". In the table 300, a check mark is added to a bit to be inverted, and a hyphen symbol (-) is added to the other bits. Although not illustrated, the candidate state s' is "1001010110" in this case.

On the other hand, in a case where H(s) < Hr = H(sr), The s' determination unit 131 randomly selects half of the total number of bits, for example, N/2 = 10/2 = 5, from the selection candidate bits, and inverts the half. Meanwhile, in a case where the number M of selection candidate bits is less than half of the total number N/2 of bits, the s' determination unit 131 selects and inverts all of the M selection candidate bits. M is expected to be more than 2.

An example of the table 300 illustrates a case where the s' determination unit 131 selects and inverts five bits of indices "4", "7", "8", "9", and "10". Although not illustrated, the candidate state s' is "1001011101" in this case.

Other methods may be considered as methods for determining s' by the s' determination unit 131. For example, the s' determination unit 131 may compare each bit of the current state s and the state sr of the reference, randomly select half of the total number of bits having different values, and generate the candidate state s' of the next transition destination by inverting a value of the selected bit in s.

According to the data processing apparatus 100 of the second embodiment, solution-finding performance may be improved. By selecting the predetermined number of replica processing units from the plurality of replica processing units by prioritizing a replica processing unit having a small difference in temperature value from the temperature value corresponding to the replica processing unit falling into the local solution, the data processing apparatus 100 may appropriately acquire the state of the reference.

When the difference between the temperature values of the replica processing unit falling into the local solution and the other replica processing unit is too large, there is a high possibility that a deviation of energy between the states that may be taken by both replica processing units increases. Therefore, when the state sr of the reference is acquired by using the replica processing unit having a relatively large difference in temperature value from the replica processing unit falling into the local solution (state s), there is a possibility that the magnitude of the energy mountain around the state s may not be appropriately evaluated by comparing H(s) and H(sr).

Accordingly, the data processing apparatus 100 preferentially selects a replica processing unit having a small difference in temperature value from the replica processing unit falling into the local solution. Accordingly, the data processing apparatus 100 may select another replica processing unit having a state in which a deviation of energy is relatively small with respect to the state s in the replica processing unit falling into the local solution, as an acquisition source of the state sr of the reference. As a result, the data processing apparatus 100 may appropriately evaluate the magnitude of the energy mountain around the state s by comparing H(s) and H(sr). Therefore, by comparing H(s) and H(sr), the data processing apparatus 100 may appropriately determine the state s, for example, the number of state variables to be updated to escape from the local solution in the replica processing unit falling into the local solution, and may generate the candidate state s' of the transition destination.

For example, in a case of H(s) < H(sr), for example, in a case where it is estimated that the energy mountain around the local solution is large, the data processing apparatus 100 may reduce a possibility of falling into the same local solution again in the replica processing unit by inverting the values of a relatively large number of state variables. In a case of H(s) ≥ H(sr), for example, in a case where it is estimated that the energy mountain around the local solution is small, the data processing apparatus 100 may reduce a possibility that the replica processing unit misses a more appropriate solution in the vicinity of the local solution by inverting the values of a relatively small number of state variables.

By causing the corresponding replica processing unit to transition to the candidate state s' generated in this manner and to continue the solution search, the data processing apparatus 100 may efficiently escape from the state s, for example, the local solution in the replica processing unit. As a result, the data processing apparatus 10 may increase the possibility that a more appropriate solution is reached for the plurality of replicas as a whole. The data processing apparatus 10 may acquire an appropriate solution in a relatively short time, and may speed up the solution finding.

As described above, the data processing apparatus 100 executes, for example, the following process. Hereinafter, the replica processing unit is simply referred to as a replica.

Based on an evaluation function including a plurality of state variables, the processor 101 detects that the number of times a first state indicated by values of the plurality of state variables occurs within a predetermined time in a first replica exceeds a predetermined number of times in a solution search performed using a plurality of replicas. Each of the plurality of replicas indicates the values of the plurality of state variables, and corresponds to a plurality of temperature values. The processor 101 selects a predetermined number of replicas from the plurality of replicas by prioritizing a replica having a small difference in temperature value from a first temperature value corresponding to the first replica. At this time, the processor 101 may exclude the first replica from selection candidates. Based on the states acquired by the solution search in each of the predetermined number of selected replicas, the processor 101 acquires a second state to be compared with the first state. According to the comparison between the first value of the evaluation function corresponding to the first state and the second value of the evaluation function corresponding to the second state, the processor 101 determines the number of state variables of which the value is to be changed among the plurality of state variables in the first state. Among the plurality of state variables in the first state, the processor 101 generates a third state in which the values of the determined number of state variables are changed. By using the third state, the processor 101 continues the solution search in the first replica.

Accordingly, the data processing apparatus 100 may improve the solution-finding performance. By selecting a predetermined number of replicas from the plurality of replicas by prioritizing a replica having a small difference in temperature value from the temperature value corresponding to the replica falling into the local solution, the data processing apparatus 100 may appropriately acquire the second state as a reference.

The solution search by the replica exchange method using a plurality of replicas is executed by, for example, the processor 108a. Meanwhile, the processor 101 may perform the solution search by the replica exchange method. The energy function according to the second embodiment is also referred to as an evaluation function. Energy corresponds to a value of the evaluation function. A state in the replica is represented by a plurality of bits, for example, the values of the plurality of state variables. The current state of each replica may be held in the RAM 102 or the RAM 108b. In each replica, the lowest energy state obtained up to the current time point may be held at the RAM 102 or the RAM 108b.

As described above, the processor 101 may detect that the number of times the first state occurs within the predetermined time exceeds the predetermined number of times, for each replica, by comparing the continuous rejection count θnum with the threshold value θstep. Alternatively, in a case where a Rejection free method is used, when a replica falls into a local solution, a behavior is repeated in which only the same state is adopted, or a state immediately returns to the same state even when the state transitions to another state. Therefore, in a case where the Rejection free method is used, the processor 101 may count, for each replica, the number of times the first state is reached after each trial within a predetermined time after the first state is reached, and may detect that the number of times exceeds the predetermined number of times in a certain replica.

For example, in the acquisition of the second state, the processor 101 may acquire, as the second state, a state in which the value of the evaluation function is the smallest among the current states of the selected predetermined number of respective replicas. Accordingly, the data processing apparatus 100 may increase the possibility of acquiring, as a reference, the second state in which the value of the evaluation function is relatively close to that of the first state, and may appropriately acquire the second state.

In the acquisition of the second state, the processor 101 may acquire a state in which the value of the evaluation function is the smallest among the states obtained by the solution search up to the current time point in each of the predetermined number of selected replicas, as the second state. Accordingly, the data processing apparatus 100 may increase the possibility of acquiring, as a reference, the second state in which the value of the evaluation function is relatively close to that of the first state, and may appropriately acquire the second state.

Alternatively, the processor 101 may determine the value of the state variable corresponding to the index, which is included in the second state by majority vote of the values of the state variables corresponding to the same index, which are included in the current state in each of the predetermined number of replicas in the acquisition of the second state. Accordingly, the data processing apparatus 100 may increase the possibility of acquiring, as a reference, the second state in which the value of the evaluation function is relatively close to that of the first state, and may appropriately acquire the second state.

In the determination of the number of state variables the value of which is to be changed, in a case where a first value is less than a second value, the processor 101 may set the number as a first number. In a case where the first value is equal to or more than the second value, the processor 101 may set the number to a second number less than the first number. Accordingly, the data processing apparatus 100 may efficiently escape from the first state, for example, the local solution in the first replica.

By determining the number of state variables of which values are to be changed, the processor 101 may acquire a third number of state variables having different values in the second state and the first state. In a case where the first value is equal to or more than the second value, the processor 101 may determine the number of state variables of which values are to be changed, based on the third number. In a case where the first value is less than the second value, the processor 101 may set the number of state variables of which values are to be changed to a predetermined value. Accordingly, the data processing apparatus 100 may efficiently escape from the first state, for example, the local solution in the first replica.

In the determining the number of state variables of which values are to be changed based on the third number, in a case where the third number is equal to or more than half of the number of plurality of state variables handled by one replica, the processor 101 may set the number of state variables of which values are to be changed to half of the number of plurality of state variables. In a case where the third number is less than half the number of plurality of state variables handled by one replica, the processor 101 may set, as the third number, the number of state variables of which values are to be changed. Accordingly, the data processing apparatus 100 may efficiently determine the number of state variables of which values are to be changed from the first state.

In generation of a third state, the processor 101 may generate the third state by selecting a determined number of state variables having values different from those of the second state in the first state and changing the value of the selected state variable among the plurality of state variables in the first state. Accordingly, the data processing apparatus 100 may efficiently generate the third state.

By selecting the determined number of state variables, the processor 101 may randomly select the number of state variables from the plurality of state variables in the first state or may select the number of state variables based on the index of the state variable. Accordingly, the data processing apparatus 100 may efficiently generate the third state. As a method of selecting based on the index, for example, a method of selecting state variables such that a difference between indices is as large as possible, a method of selecting state variables at intervals such that the difference between indices is equal to or more than a certain value, and the like are conceivable.

The process of the processor 101 described above may be executed by the processor 108a. For example, the s' determination unit 131 and the reference determination unit 150 corresponding to the process described above may be realized by the processor 101 or may be realized by the processor 108a.

The information process of the first embodiment may be realized by causing the processing unit 12 to execute a program. The information processing according to the second embodiment may be realized by causing the processor 101 to execute a program. The program may be recorded in the computer-readable recording medium 113.

For example, the program may be circulated by distributing the recording medium 113 in which the program is recorded. The program may be stored in another computer, and the program may be distributed via a network. For example, a computer may store (install), in a storage device such as the RAM 102 or the HDD 103, the program recorded in the recording medium 113 or the program received from the other computer, and read the program from the storage device and execute the program.

**Claims**

1. A data processing program comprising instructions which, when executed by a computer, cause the computer to execute a process comprising:

   selecting, in a solution search based on an evaluation function which includes a plurality of state variables, the solution search that is performed by using a plurality of replicas which respectively indicate values of the plurality of state variables and which correspond to a plurality of temperature values, when the number of times a first state indicated by the values of the plurality of state variables occurs within a predetermined time in a first replica among the plurality of replicas exceeds a predetermined number of times, a predetermined number of replicas from the plurality of replicas by prioritizing a replica with a low difference in temperature value from a first temperature value which corresponds to the first replica;

acquiring a second state to be compared with the first state, based on a state acquired by the solution search in each of the predetermined number of replicas;

determining the number of state variables of which values are to be changed, among the plurality of state variables in the first state, in accordance with comparison between a first value of the evaluation function which corresponds to the first state and a second value of the evaluation function which corresponds to the second state;

generating a third state in which the values of the number of state variables among the plurality of state variables in the first state are changed; and

continuing the solution search in the first replica by using the third state.

2. The data processing program according to claim 1,
wherein the acquiring of the second state includes acquiring, among states of a current state in each of the predetermined number of replicas, the state with a minimum value of the evaluation function, as the second state.

3. The data processing program according to claim 1,
wherein the acquiring of the second state includes acquiring, among states of the state obtained by the solution search in each of the predetermined number of replicas, the state with a minimum value of the evaluation function, as the second state.

4. The data processing program according to claim 1,
wherein the acquiring of the second state includes determining, based on majority vote of values of the state variables that correspond to the same index among current states in each of the predetermined number of replicas, a value of the state variable that is included in the second state and corresponds to the index.

5. The data processing program according to claim 1,
wherein the determining of the number includes:

setting, in a case where the first value is less than the second value, the number to a first number, and
setting, in a case where the first value is equal to or more than the second value, the number to a second number less than the first number.

6. The data processing program according to claim 1,
wherein the determining of the number includes:

acquiring a third number of the state variables with different values in the first state and the second state,
determining, in a case where the first value is equal to or more than the second value, the number based on the third number, and
setting, in a case where the first value is less than the second value, the number to a predetermined value.

7. The data processing program according to claim 6,

wherein in the determining of the number based on the third number, the program causes the computer to execute a process of
setting, in a case where the third number is equal to or more than half the number of the plurality of state variables, the number to half the number of the plurality of state variables, and
setting, in a case where the third number is less than half the number of the plurality of state variables, the number to the third number.

8. The data processing program according to claim 1,
wherein the generating of the third state includes:

selecting, the determined number among the plurality of state variables in the first state, the state variables with values different from the second, and
changing the values of the number of selected state variables.

9. The data processing program according to claim 8,

wherein the selecting of the number of the state variables includes

selecting, at random or based on an index of the state variable, the number of the state variable from the plurality of state variables in the first state.

10. A data processing method implemented by a computer, the data processing method comprising:

selecting, in a solution search based on an evaluation function which includes a plurality of state variables, the solution search that is performed by using a plurality of replicas which respectively indicate values of the plurality of state variables and which correspond to a plurality of temperature values, when the number of times a first state indicated by the values of the plurality of state variables occurs within a predetermined time in a first replica among the plurality of replicas exceeds a predetermined number of times, a predetermined number of replicas from the plurality of replicas by prioritizing a replica with a low difference in temperature value from a first temperature value which corresponds to the first replica;
acquiring a second state to be compared with the first state, based on a state acquired by the solution search in each of the predetermined number of replicas;
determining the number of state variables of which values are to be changed, among the plurality of state variables in the first state, in accordance with comparison between a first value of the evaluation function which corresponds to the first state and a second value of the evaluation function which corresponds to the second state;
generating a third state in which the values of the number of state variables among the plurality of state variables in the first state are changed; and
continuing the solution search in the first replica by using the third state.

11. A data processing apparatus comprising:

a storage unit that stores, for each of a plurality of replicas which respectively indicate values of a plurality of state variables, which correspond to a plurality of temperature values, and which are used for a solution search based on an evaluation function that includes the plurality of state variables, a state indicated by the values of the plurality of state variables acquired in a process of the solution search; and
a processing unit that, in the solution search,
selects, when the number of times a first state occurs within a predetermined time in a first replica among the plurality of replicas exceeds a predetermined number of times, a predetermined number of replicas from the plurality of replicas by prioritizing a replica with a low difference in temperature value from a first temperature value which corresponds to the first replica,
acquires a second state to be compared with the first state, based on the state of each of the predetermined number of replicas stored in the storage unit,
determines the number of state variables of which values are to be changed, among the plurality of state variables in the first state, in accordance with comparison between a first value of the evaluation function which corresponds to the first state and a second value of the evaluation function which corresponds to the second state,
generates a third state in which the values of the number of state variables among the plurality of state variables in the first state are changed, and
continues the solution search in the first replica by using the third state.

# FIG. 1

# FIG. 2

DATA PROCESSING APPARATUS 100

PROCESSOR 101

RAM 102

HDD 103

GPU 104

INPUT INTERFACE 105

MEDIUM READER 106

COMMUNICATION INTERFACE 107

BUS

ACCELERATOR CARD 108

PROCESSOR 108a

RAM 108b

111

112

113

NETWORK 114

# FIG. 3

# FIG. 4

DATA PROCESSING APPARATUS — 100

REPLICA PROCESSING UNIT — 120

REFERENCE DETERMINATION UNIT — 150

REPLICA PROCESSING UNIT — 120a

REPLICA PROCESSING UNIT — 120n

EXCHANGE CONTROL UNIT — 140

# FIG. 5

## FIG. 6

```
                    ( START )

                          │                                      S10
   ┌──────────────────────▼──────────────────────┐
   │ SET INITIAL VALUE OF s AND INITIAL VALUE     │
   │                   OF H                        │
   └──────────────────────┬──────────────────────┘
                          │                                      S11
   ┌──────────────────────▼──────────────────────┐
   │ RANDOMLY FLIP i-TH OF s TO OBTAIN s', AND    │
   │               CALCULATE Δsᵢ                   │
   └──────────────────────┬──────────────────────┘
                          │                                      S12
   ┌──────────────────────▼──────────────────────┐
   │              CALCULATE ΔHᵢ                    │
   └──────────────────────┬──────────────────────┘
                          │                                      S13
                 < IS s' ADOPTED? >──── YES
                          │ NO                                   S14
   ┌──────────────────────▼──────────────────────┐
   │ COUNT CONTINUOUS REJECTION COUNT θ num        │
   └──────────────────────┬──────────────────────┘
                          │                                      S15
                 < θ num > θ step ? >──── YES
                          │ NO
```

$\Delta s_i$ , $\Delta H_i$

S10 — SET INITIAL VALUE OF s AND INITIAL VALUE OF H

S11 — RANDOMLY FLIP i-TH OF s TO OBTAIN s', AND CALCULATE $\Delta s_i$

S12 — CALCULATE $\Delta H_i$

S13 — IS s' ADOPTED? — YES

S14 — COUNT CONTINUOUS REJECTION COUNT $\theta$ num — NO

S15 — $\theta$ num $>$ $\theta$ step ? — YES / NO

S16 — ACQUIRE STATE sr AND ENERGY Hr OF REFERENCE

S17 — $H < Hr$ ? — NO / YES

S18 — GENERATE CANDIDATE STATE s' BY FLIPPING x BITS

S19 — GENERATE CANDIDATE STATE s' BY FLIPPING TWO BITS

S20 — UPDATE s TO s' AND UPDATE H TO H' ACCORDING TO RESULT OF ADOPTION DETERMINATION

S21 — IS END CONDITION SATISFIED? — NO / YES

END

# FIG. 7

```
                    ┌─────────────┐
                    │    START    │
                    └──────┬──────┘
                           │                              ⌐ S30
        ┌──────────────────▼──────────────────────┐
        │   ACQUIRE INFORMATION ON TWO REPLICA     │
        │  PROCESSING UNITS OF EXCHANGE CANDIDATES │
        └──────────────────┬──────────────────────┘
                           │                              ⌐ S31
     ╱─────────────────────▼─────────────────────────╲
    ⟨   rand < exp((1/T1-1/T2)*(H1-H2)) ?             ⟩────┐
     ╲───────────────────────────────────────────────╱    │ NO
                           │ YES                           │
                           │                      ⌐ S32    │
        ┌──────────────────▼──────────────────────┐       │
        │           EXECUTE EXCHANGE              │       │
        └──────────────────┬──────────────────────┘       │
                           │◄─────────────────────────────┘
                    ┌──────▼──────┐
                    │     END     │
                    └─────────────┘
```

# FIG. 8

```
         ┌─────────┐
         │  START  │
         └─────────┘
              │
              ▼                                    ⟋ S40
┌──────────────────────────────────────────────────┐
│   REFER TO STATE AND ENERGY H OF a1 REPLICA        │
│  PROCESSING UNITS HAVING SMALL DIFFERENCE IN       │
│ TEMPERATURE VALUE FROM CORRESPONDING REPLICA       │
│               PROCESSING UNIT                      │
└──────────────────────────────────────────────────┘
              │
              ▼                                    ⟋ S41
┌──────────────────────────────────────────────────┐
│   COMPARE ENERGIES OF RESPECTIVE a1 REPLICA        │
│ PROCESSING UNITS, AND SELECT ONE STATE OF REPLICA  │
│  PROCESSING UNIT HAVING SMALLEST ENERGY AS         │
│               REFERENCE                            │
└──────────────────────────────────────────────────┘
              │
              ▼                                    ⟋ S42
┌──────────────────────────────────────────────────┐
│ SELECT AND FLIP x BITS OR TWO BITS AMONG DIFFERENT │
│  BITS WITH RESPECT TO REFERENCE TO OBTAIN NEXT     │
│               CANDIDATE STATE s'.                  │
└──────────────────────────────────────────────────┘
              │
              ▼
         ┌─────────┐
         │   END   │
         └─────────┘
```

# FIG. 9

START

S40a

REFER TO LOCAL SOLUTION AND ENERGY H OBTAINED BY a1 REPLICA PROCESSING UNITS HAVING SMALL DIFFERENCE IN TEMPERATURE VALUE FROM CORRESPONDING REPLICA PROCESSING UNIT

S41a

COMPARE ENERGIES OF LOCAL SOLUTIONS OF RESPECTIVE a1 REPLICA PROCESSING UNITS, AND SELECT ONE LOCAL SOLUTION HAVING SMALLEST ENERGY AS REFERENCE

S42a

SELECT AND FLIP x BITS OR TWO BITS AMONG DIFFERENT BITS WITH RESPECT TO REFERENCE TO OBTAIN NEXT CANDIDATE STATE s'.

END

# FIG. 10

START

S40b

REFER TO STATES OF a2 REPLICA PROCESSING UNITS HAVING SMALL DIFFERENCE IN TEMPERATURE VALUE FROM CORRESPONDING REPLICA PROCESSING UNIT

S41b

GENERATE STATE OBTAINED BY MAJORITY VOTE OF BITS OF STATES OF RESPECTIVE a2 REPLICA PROCESSING UNITS, AND CALCULATE ENERGY OF STATE AS REFERENCE

S42b

SELECT AND FLIP x BITS OR TWO BITS AMONG DIFFERENT BITS WITH RESPECT TO REFERENCE TO OBTAIN NEXT CANDIDATE STATE s'.

END

# FIG. 11

|  | BIT 1 | BIT 2 | BIT 3 | BIT 4 | BIT 5 | BIT 6 | BIT 7 | BIT 8 | BIT 9 | BIT 10 |
|---|---|---|---|---|---|---|---|---|---|---|
| s (1) | 0 | 0 | 1 | 1 | 1 | 0 | 0 | 0 | 1 | 1 |
| s (2) | 0 | 0 | 0 | 0 | 1 | 1 | 1 | 0 | 1 | 0 |
| s (3) | 0 | 1 | 1 | 0 | 1 | 0 | 0 | 0 | 1 | 0 |
| a (4) | 1 | 0 | 0 | 1 | 0 | 1 | 0 | 0 | 0 | 0 |
| s (5) | 0 | 1 | 0 | 0 | 0 | 0 | 0 | 0 | 1 | 0 |
| MAJORITY VOTE | 0 | 0 | 0 | 0 | 1 | 0 | 0 | 0 | 1 | 0 |

200

FIG. 12

300

| ITEM | BIT 1 | BIT 2 | BIT 3 | BIT 4 | BIT 5 | BIT 6 | BIT 7 | BIT 8 | BIT 9 | BIT 10 |
|---|---|---|---|---|---|---|---|---|---|---|
| sr | 1 | 0 | 0 | 1 | 0 | 1 | 1 | 1 | 0 | 1 |
| s | 1 | 0 | 0 | 0 | 0 | 1 | 0 | 0 | 1 | 0 |
| SELECTION CANDIDATES | × | × | × | ○ | × | × | ○ | ○ | ○ | ○ |
| EXAMPLE OF 2-BIT SELECTION | — | — | — | ✓ | — | — | — | ✓ | — | — |
| EXAMPLE OF HALF-BIT SELECTION | — | — | — | ✓ | — | — | ✓ | ✓ | ✓ | ✓ |

**Europäisches Patentamt**
**European Patent Office**
**Office européen des brevets**

# EUROPEAN SEARCH REPORT

Application Number

EP 24 20 7717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/366011 A1 (DOTE AKI [JP]) 17 November 2022 (2022-11-17) * paragraph [0024] - paragraph [0210]; figures 1-11 * | 1-11 | INV. G06N5/01 G06N7/01 |
| A | ZHU ZHENG ET AL: "Efficient Cluster Algorithm for Spin Glasses in Any Space Dimension", PHYSICAL REVIEW LETTERS, vol. 115, no. 7, 1 August 2015 (2015-08-01), XP093264110, US ISSN: 0031-9007, DOI: 10.1103/PhysRevLett.115.077201 * the whole document * | 1-11 | |
| A | KONOSHIMA MAKIKO ET AL: "Replicated Simulated Annealing with a Global-Best Reference for Efficient Hardware Implementation", JOURNAL OF THE PHYSICAL SOCIETY OF JAPAN, vol. 91, no. 11, 11 October 2022 (2022-10-11), XP093264020, ISSN: 0031-9015, DOI: 10.7566/JPSJ.91.113001 * the whole document * | 1-11 | |

**TECHNICAL FIELDS SEARCHED (IPC)**

G06N

The present search report has been drawn up for all claims

| Place of search | Date of completion of the search | Examiner |
|---|---|---|
| The Hague | 31 March 2025 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 7717

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | Publication date | Patent family member(s) | | Publication date |
|---|---|---|---|---|
| US 2022366011 A1 | 17-11-2022 | CN | 115329978 A | 11-11-2022 |
| | | EP | 4089591 A2 | 16-11-2022 |
| | | JP | 7648890 B2 | 19-03-2025 |
| | | JP | 2022174616 A | 24-11-2022 |
| | | JP | 2025039876 A | 21-03-2025 |
| | | US | 2022366011 A1 | 17-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022052222 A
- JP 2023056471 A
- US 20170116159
- US 20170083873